**Europäisches Patentamt**

**European Patent Office**

**Office européen des brevets**

(19)

(11) Veröffentlichungsnummer : **0 504 487 B1**

(12)

# EUROPÄISCHE PATENTSCHRIFT

(45) Veröffentlichungstag der Patentschrift :
**07.06.95 Patentblatt 95/23**

(51) Int. Cl.⁶ : **G01G 3/16,** G01G 3/13,
G01G 3/18

(21) Anmeldenummer : **91121682.8**

(22) Anmeldetag : **18.12.91**

(54) **Elektromechanische Waage mit Saitenschwinger.**

(30) Priorität : **19.03.91 CH 825/91**

(43) Veröffentlichungstag der Anmeldung :
**23.09.92 Patentblatt 92/39**

(45) Bekanntmachung des Hinweises auf die
Patenterteilung :
**07.06.95 Patentblatt 95/23**

(84) Benannte Vertragsstaaten :
**DE FR GB**

(56) Entgegenhaltungen :
**EP-A- 0 136 627**
**WO-A-82/04124**
**DE-A- 2 109 175**
**US-A- 4 418 774**

(73) Patentinhaber : **Mettler-Toledo AG**
**Im Langacher**
**CH-8606 Greifensee (CH)**

(72) Erfinder : **Stoller, Beat**
**Seilerwis 7**
**CH-8606 Greifensee (CH)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine elektromechanische Waage mit einem frequenzgebenden Kraftsensor und einem Mikroprozessor zur Umformung der Messgrösse, wobei ein erster Quarzschwinger als Taktgeber für den Mikroprozessor und als Zeitgeber für die Messung der Schwingungsfrequenz des Kraftsensors vorgesehen ist, ferner mit einem frequenzgebenden Temperatursensor zur Messung der Waagentemperatur. Als frequenzgebender Kraftsensor kann z.B. ein Saitenschwinger vorgesehen sein.

Zur Verbesserung der Genauigkeit solcher Waagen ist es bekanntlich notwendig, die Temperaturabhängigkeit des Kraftsensors bzw. der Schwingungsfrequenz desselben derart zu kompensieren, dass eine von der Temperatur unabhängige Empfindlichkeit der Waage erreicht wird. Auch andere temperaturabhängige Wägeparameter bedürfen der Korrektur, um beispielsweise Nullpunktverschiebungen und Linearitätsabweichungen möglichst klein zu halten.

Es ist ausserdem bekannt, den Temperatureinfluss auf die Wägeparameter entweder durch Massnahmen, welche auf unmittelbaren Gegenwirkungen beruhen, direkt zu kompensieren oder eine mit der Messgrösse in Beziehung zu setzende Korrekturgrösse auf der Basis der laufend gemessenen Waagentemperatur rechnerisch zu ermitteln. In beiden Fällen können sich Schwierigkeiten ergeben, wenn die Wägeparameter sowie allfällige Kompensationsmittel oder Temperatursensoren starken Streuungen unterworfen sind und Nichtlinearitäten aufweisen, so dass ein Abgleich jeder Waage, unter Umständen bei mehreren Temperaturwerten, notwendig ist, um eine genaue Kompensationswirkung zu erzielen. Von diesem Gesichtspunkt aus sind deshalb streuungsarme und möglichst genau und linear arbeitende Komponenten anzustreben, was jedoch andererseits zu übermässig teuren Kompensationslösungen führen kann.

Aus der US-Patentschrift Nr. 4.464.725 ist eine Waage der eingangs genannten Art bekannt, bei welcher für eine auf der Basis rechnerisch ermittelter Korrekturgrössen durchgeführten Temperaturkompensation ein separater frequenzgebender Temperatursensor vorgesehen ist und als Zeitgeber für die Messung der temperaturabhängigen Schwingungsfrequenz des Temperatursensors der Taktgeber des Mikroprozessors dient.

Bei dieser Lösung kommen keine direkt wirkenden Kompensationsmassnahmen zum Einsatz. Der Temperatursensor misst die Temperatur der Waage, wobei die gemessenen Temperaturwerte zur rechnerischen Korrektur der Messgrösse ausgewertet werden. Eine solche umfassende Temperaturkompensation der Wägeparameter ist jedoch nur mit verhältnismässig hohem Aufwand hinsichtlich der Hardware als auch der Software möglich, wenn umfangreiche Abgleicharbeiten vermieden werden sollen.

Die Erfindung nach dem Anspruch 1 zeigt nun einen Weg, um das erwähnte Problem auf einfache Weise und mit geringerem Aufwand zu lösen.

Der erste Quarzschwinger, welcher voraussetzungsgemäss als Taktgeber für den Mikroprozessor und als Zeitgeber für die Messung der Schwingungsfrequenz des frequenzgebenden Kraftsensors dient, ist ein verhältnismässig teures Bauteil, vor allem bedingt durch die geforderten engen Qualitätstoleranzen im Hinblick auf die vorgenannten Aufgaben. Bei der Lösung nach der US-Patentschrift Nr. 4.464.725 ist für den Temperatursensor ein ebenso hochwertiges Bauteil, z.B. in Form eines Quarzschwingers, nötig, um die genannten Genauigkeitsanforderungen zu erfüllen. Bei der erfindungsgemässen Lösung sind nun die Funktionen der beiden Quarzschwinger bezüglich der Temperaturmessung gewissermassen vertauscht, indem der Taktgeber des Mikroprozessors auch die Funktion eines Temperatursensors ausübt, wobei der zweite Quarzschwinger lediglich noch als Zeitgeber dient, wofür billigere Ausführungen zur Verfügung stehen. Ausserdem dient der erste Quarzschwinger noch zur direkten Temperaturkompensation des Kraftsensors. Letztere Massnahme hat nicht nur den Vorteil, dass der bereits vorhandene hochwertige Quarzschwinger besser ausgenützt wird; vielmehr ist eine Temperaturkompensation, welche auf direkter Gegenwirkung beruht, unter den gegebenen Voraussetzungen genauer als die rechnerische Korrekturmethode. Da zudem die Kennlinie des Kraftsensors den wichtigsten Wägeparameter darstellt, kommt somit der vorgeschlagenen Massnahme besondere Bedeutung zu. Ausschlaggebend ist dabei der Umstand, dass frequenzgebende Kraftsensoren, z.B. Saitenschwinger, mit nur sehr geringer Streuung der Kennlinie herstellbar sind, so dass ein diesbezüglicher Abgleich entbehrlich ist.

Die genaue Temperaturmessung dient zur rechnerischen Korrektur des Wägeresultats aufgrund der übrigen temperaturabhängigen Wägeparameter. Zu diesem Zweck wird im Rahmen der erfindungsgemässen Lösung ein zweiter Quarzschwinger nur noch als Zeitgeber benötigt. Dafür kann ein handelsüblicher, für Uhren bestimmter Quarzschwinger verwendet werden. Sogenannte Uhrenquarze sind sehr kostengünstig, verfügen aber trotzdem über die für den vorgenannten Zweck erforderliche Genauigkeit und sind weitgehend temperaturunabhängig. Die Verwendung eines temperaturunabhängigen Quarzschwingers als Zeitgeber für den frequenzgebenden Temperatursensor hat im weiteren den Vorteil, dass für die Temperaturerfassung nicht, wie sonst meist üblich, zwei temperaturabhängige Quarzschwinger mit unterschiedlicher Temperaturabhängigkeit der Frequenz, sondern nur ein einziger Quarzschwinger bestimmend ist. Auf diese Weise wird das Störpotential herabgesetzt.

Bei der Waage nach der US-Patentschrift Nr. 4.464.725 ist dagegen eine entsprechende Lösung mit Uhrenquarz nicht möglich, weil sich ein Uhrenquarz mit einer Schwingungsfrequenz von üblicherweise 32,768 kHz zum Einsatz als Zeitgeber für die Messung der Schwingungsfrequenz des Kraftsensors und als Taktgeber des Mikrozessors in hochauflösenden Waagen (Taktfrequenz etwa 16 MHz) nicht eignet.

Damit der Mikroprozessor einwandfrei funktioniert, muss sich dessen Taktgeber in seiner unmittelbaren Nähe befinden. Andererseits ist der Taktgeber, welcher nun auch als Temperatursensor arbeitet, möglichst im Nahbereich jener Teile einer Wägezelle anzuordnen, an welchen die zu kompensierenden temperaturabhängigen Effekte auftreten. Vorzugsweise ist deshalb der den Mikroprozessor tragende Print an der den Kraftsensor enthaltenden Wägezelle montiert und zusammen mit dieser in einem gemeinsamen Gehäuse angeordnet, um eine möglichst genaue Erfassung des Temperaturverlaufs in der Wägezelle zu erreichen.

Die Temperatur als Messgrösse lässt sich z.B. aus den Schwingungsfrequenzen der beiden Quarzschwinger anhand der als Potenzreihen dargestellten Temperaturfunktionen ableiten, beispielsweise für eine Ausgangstemperatur von 25°C. Für Quarze mit den Temperaturkoeffizienten $\alpha_1$, $\beta_1$...bzw. $\alpha_2$, $\beta_2$...findet man für die Temperatur $T = 25° + \Delta T$:

$$\text{Quarz 1: } f_1 = f_{1\,25°C}(1 + \alpha_1\Delta T + \beta_1\Delta T^2 + ...) \quad (1)$$

$$\text{Quarz 2: } f_2 = f_{2\,25°C}(1 + \alpha_2\Delta T + \beta_2\Delta T^2 + ...) \quad (2)$$

$$\text{für } \alpha\Delta T, \beta\Delta T << 1 \quad \frac{f_1}{f_2} \approx \frac{f_{1\,25°C}}{f_{2\,25°C}}[1 + (\alpha_1 - \alpha_2)\Delta T + (\beta_1 - \beta_2)\Delta T^2 + ...] \quad (3)$$

Wie ersichtlich, ist der Quotient aus den beiden Frequenzwerten nur eine Funktion der Temperatur. Aus der Gleichung (3) ergibt sich die Temperatur-Information.

Gemäss der Erfindung ist für den zweiten Quarzschwinger ein Typ vorgesehen, dessen Frequenz wenigstens in erster Näherung von der Temperatur unabhängig ist (Temperaturkoeffizient $\alpha_2 = 0$). Dadurch ist für die Temperaturerfassung nur die Temperatur des ersten Quarzschwingers bestimmend.

Ein weiterer Vorteil ergibt sich, wenn für die Quarze der beiden Quarzschwinger Typen gewählt werden, bei denen die Koeffizienten ($\beta$) des quadratischen Gliedes der als Potenzreihe dargestellten Temperaturfunktion einander gleich sind. In diesem Fall ergibt sich eine lineare Abhängigkeit der Temperatur gemäss Gleichung (3). Dabei genügt ein Abgleich bei einem bestimmten Temperaturwert (z.B. 20°), um als Messgrösse die absolute Temperatur zu erhalten. In vielen Fällen kann jedoch sogar auf den erwähnten Abgleich verzichtet werden, da die relative Genauigkeit der Temperaturmessung für Kompensationszwecke meist ausreicht.

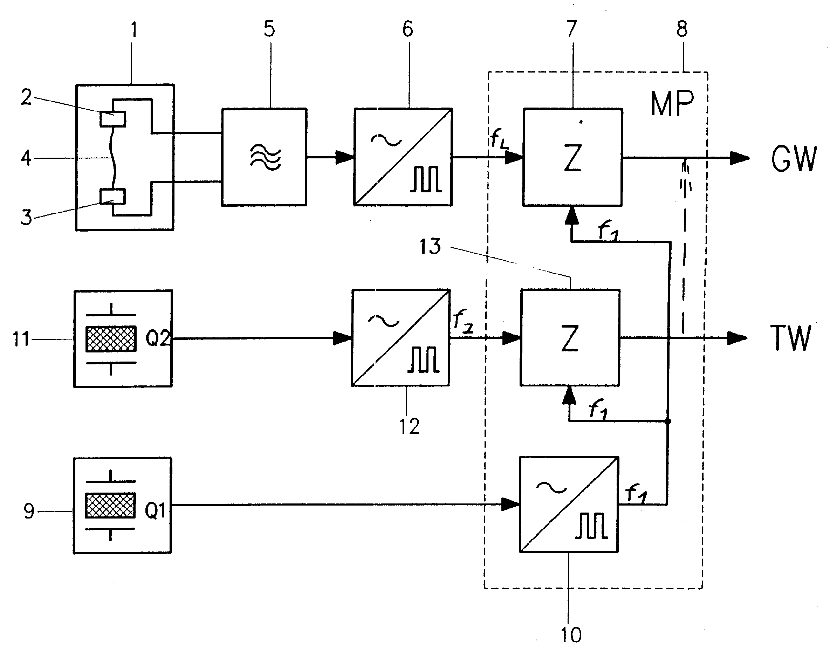

Nachstehend wird anhand der beigefügten Zeichnung ein Ausführungsbeispiel der Erfindung näher erläutert. In der Zeichnung ist ein Blockschema dargestellt, das die für das Verständnis der Erfindung wesentlichen Teile der elektronischen Ausrüstung einer Saitenwaage zeigt.

Als frequenzgebender Kraftsensor dient im vorliegenden Beispiel ein Saitenschwinger 1 mit einer zwischen zwei Halterungen 2 und 3 eingespannten Saite 4, welche durch einen Oszillator 5 in Eigenschwingung versetzt wird. Am Ausgang des Oszillators 5 entsteht ein Signal, dessen Frequenz sich mit der an den Halterungen 2 und 3 wirkenden Spannkraft der schwingenden Saite 4, d.h. mit der Belastung der Waage ändert. Dieses Signal wird über einen Impulsformer 6 einem Zähler 7 zugeführt, der von einem Mikroprozessor 8 angesteuert wird. Als Taktgeber für den Mikroprozessor 8 und den Zähler 7 dient ein erster Quarzschwinger 9, dem ein Impulsformer 10 zugeordnet ist. Durch Auszählen der Zählimpulse wird im Mikroprozessor 8 in an sich bekannter Weise der einer bestimmten Waagenlast entsprechende Frequenzwert ermittelt und unter Berücksichtung allfälliger Korrekturen der von der Waage anzuzeigende Gewichtswert GW berechnet.

Der erste Quarzschwinger 9 ist ausserdem als frequenzgebender Temperatursensor ausgebildet, d.h. er ist mit einem Quarz Q1 versehen, dessen Temperaturkoeffizient $\alpha_1$ einen von Null abweichenden Wert hat. Die dem Impulsformer 10 des Quarzschwingers 9 entnommenen Zählimpulse werden zur Ermittlung des Temperaturwertes einem weiteren Zähler 13 zugeführt. Als Zeitgeber dient ein zweiter Quarzschwinger 11, dessen Quarz einen Temperaturkoeffizienten $\alpha_2 = 0$ hat und dem ebenfalls ein Impulsformer 12 zugeordnet ist. Der Mikroprozessor 8 berechnet aus den ausgezählten Zählimpulsen des Zählers 13 in ähnlicher Weise wie beim Zähler 7 den Frequenzwert $f_2$ und schliesslich den Quotienten der beiden Frequenzwerte $f_1$ und $f_2$. Das Ergebnis ist ein digitaler Temperaturwert TW, der für Kompensationszwecke zur Verfügung steht.

Um eine von der Temperatur unabhängige Empfindlichkeit der Waage zu erreichen, ist im weiteren die Temperaturkennlinie des ersten Quarzschwingers 9 an diejenige des Saitenschwingers 1 angepasst. Mit Vorteil wird im übrigen die Wahl der für die beiden Quarzschwinger 9 und 11 verwendeten Quarze Q1 und Q2 so getroffen, dass die Temperaturkoeffizienten $\beta_x$ den gleichen Wert haben. Dadurch ergibt sich eine lineare Beziehung zwischen dem ermittelten Temperaturwert TW und der am Temperatursensor 9 herrschenden Temperatur.

## Patentansprüche

1. Elektromechanische Waage, umfassend
   - einen frequenzgebenden Kraftsensor (1),
   - einen Mikroprozessor (8) zur Umformung der Messgrössen,
   - einen ersten Quarzschwinger (9) als Taktgeber für den Mikroprozessor (8) und als Zeitgeber für die Messung der Schwingungsfrequenz ($f_L$) des Kraftsensors (1), wobei dieser Quarzschwinger (9) eine Schwingungsfrequenz ($f_1$) hat, deren Temperaturabhängigkeit wenigstens angenähert derjenigen der Schwingungsfrequenz des Kraftsensors (1) entspricht, und
   - einen zweiten Quarzschwinger (11) mit von der Temperatur weitgehend unabhängiger Schwingungsfrequenz ($f_2$), der als Zeitgeber für die Messung der temperaturabhängigen Schwingungsfrequenz ($f_1$) des ersten Quarzschwingers (9) dient.

2. Elektromechanische Waage nach Anspruch 1, dadurch gekennzeichnet, dass der zweite Quarzschwinger (11) einen gewöhnlich für Uhren benutzten Quarz (Q2) aufweist.

3. Elektromechanische Waage nach Anspruch 1, dadurch gekennzeichnet, dass für die Quarze (Q1, Q2) der beiden Quarzschwinger (9, 11) Typen gewählt sind, bei denen die Koeffizienten ($\beta_x$) der quadratischen Glieder der als Potenzreihe dargestellten Temperaturfunktion einander gleich sind.

4. Elektromechanische Waage nach Anspruch 1, dadurch gekennzeichnet, dass der den Mikroprozessor (8) tragende Print an der den Kraftsensor (1) enthaltenden Wägezelle montiert und zusammen mit dieser in einem gemeinsamen Gehäuse angeordnet ist.

## Claims

1. An electromechanical balance including
   - a frequency-producing force sensor (1),
   - a microprocessor (8) for transforming the measurement values,
   - a first quartz resonator (9) as a clock for the microprocessor (8) and as a timer for measurement of the frequency of oscillation ($f_L$) of the force sensor (1), wherein said quartz resonator (9) has a frequency of oscillation ($f_1$) whose temperature dependency at least approximately corresponds to that of the frequency of oscillation of the force sensor (1), and
   - a second quartz resonator (11) with a frequency of oscillation ($f_2$) which is substantially independent of temperature, the second quartz resonator serving as a timer for measurement of the temperature-dependent frequency of oscillation ($f_1$) of the first quartz resonator (9).

2. An electromechanical balance according to claim 1 characterised in that the second quartz resonator (11) has a quartz (Q2) which is usually employed for timepieces.

3. An electromechanical balance according to claim 1 characterised in that the types selected for the quartzes (Q1, Q2) of the two quartz resonators (9, 11) are those in which the coefficients ($\beta_x$) of the square members of the temperature function which is represented as an exponential series are equal to each other.

4. An electromechanical balance according to claim 1 characterised in that the printed board carrying the microprocessor (8) is mounted at the weighing cell which includes the force sensor (1), and is arranged together with said weighing cell in a common housing.

## Revendications

1. Balance électromécanique, comprenant
   - un détecteur de force générant une fréquence (1)
   - un microprocesseur (8) de transformation des grandeurs de mesure,
   - un premier oscillateur à quartz (9) constituant l'horloge du microprocesseur (8) et le générateur de rythme pour la mesure de la fréquence d'oscillation ($f_L$) du détecteur de force (1), cet oscillateur à quartz (9) ayant une fréquence d'oscillation ($f_1$) dont la sensibilité à la température correspond au moins approximativement à celle de la fréquence d'oscillation du détecteur de force (1), et
   - un second oscillateur à quartz (11) dont la fréquence d'oscillation ($f_2$) est pratiquement indépendante de la température et qui sert de générateur de rythme pour la mesure de la fréquence d'oscillation ($f_1$) du premier oscillateur à quartz (9) qui est fonction de la température.

2. Balance électromécanique selon la revendication 1, caractérisée en ce que le second oscillateur à quartz (11) comprend un quartz (Q2) utilisé en général pour les montres.

3. Balance électromécanique selon la revendication 1, caractérisée en ce que le choix des quartz (Q1, Q2) des deux oscillateurs à quartz (9, 11) porte sur des types pour lesquels les coefficients ($\beta_x$) des termes au carré de la fonction de température représentée sous forme d'une série exponentielle sont identiques.

4. Balance électromécanique selon la revendication 1, caractérisée en ce que la plaquette à circuit imprimé qui porte le microprocesseur (9) est montée sur la cellule de pesée qui contient le détecteur de force (1) et elle est disposée avec cette dernière dans un boiter commun.